# FASCICULE DE BREVET EUROPEEN

(11) **EP 2 260 197 B1**
(45) Date de publication et mention de la délivrance du brevet: **07.03.2012**
(21) Numéro de dépôt: 09723401.7
(22) Date de dépôt: 20.03.2009
(51) Int. Cl.: F02K 3/072, B64C 11/30, F02C 3/067, F02C 7/36

(54) **SYSTEME D'HELICES CONTRAROTATIVES DISPOSANT D'UN DISPOSITIF DE MISE EN DRAPEAU DES PALES D'HELICES**
GEGENLÄUFIGES PROPELLERSYSTEM MIT VORRICHTUNG ZUR LEERSTELLUNG VON PROPELLERSCHAUFELN
CONTRA-ROTATING PROPELLER SYSTEM WITH DEVICE FOR FEATHERING PROPELLER BLADES

(30) Priorité: 21.03.2008 FR 0851848
(43) Date de publication de la demande: 15.12.2010
(73) Titulaire: Snecma, 75015 Paris (FR)
(72) Inventeur: GALLET, François, 75012 Paris (FR)
(74) Mandataire: Ilgart, Jean-Christophe
(86) Numéro de dépôt international: PCT/EP2009/053280
(87) Numéro de publication internationale: WO 2009/115593

(56) Documents cités:
- FR-A- 985 976
- FR-A- 1 114 232
- FR-E- 50 123
- GB-A- 2 218 747
- US-A- 2 761 517

## Description

### DOMAINE TECHNIQUE

La présente invention se rapporte de façon générale à un système d'hélices contrarotatives pour turbomachine d'aéronef, et plus particulièrement à un système d'hélices contrarotatives disposant de moyens permettant d'assurer la mise en drapeau des pales des deux hélices.

L'invention concerne également une turbomachine pour aéronef comprenant un tel système d'hélices contrarotatives.

### ETAT DE LA TECHNIQUE ANTERIEURE

De l'art antérieur, il est connu des turbomachines à systèmes d'hélices contrarotatives, dont les hélices sont entraînées par des rotors tournant respectivement dans des sens de rotation opposés. Ces systèmes d'hélices sont généralement conçus de manière à pouvoir mettre les pales d'hélices en drapeau, c'est-à-dire à les caler de manière à ce qu'elles présentent l'incidence la plus faible possible par rapport à l'axe de la turbomachine associée. Dans un tel cas, on parle de position d'incidence minimale, de position d'angle minimal, ou encore de position neutre.

La mise en drapeau des pales d'hélices peut être désirée dans différentes circonstances, comme notamment lorsque le moteur s'arrête et qu'il devient essentiel de diminuer au mieux la traînée générée par les pales immobiles en rotation. Dans d'autres circonstances, lorsque l'une des deux hélices subit une perte de pales, la mise en drapeau des pales des deux hélices s'avère alors nécessaire pour éviter la survitesse de l'autre hélice.

En outre, la mise en drapeau des pales est recherchée lorsque l'on désire annuler ou diminuer au mieux la poussée de la turbomachine, puisque malgré leur rotation autour de l'axe moteur, leur position neutre n'engendre qu'une faible poussée, voire une poussée nulle.

La mise en drapeau peut être obtenue à l'aide des systèmes classiques de commande de calage des pales, en les pilotant de manière à ce que ces pales soient déplacées dans leur position d'incidence minimale. Néanmoins, en cas de défaillance de ces systèmes de commande de calage des pales, la mise en drapeau n'est plus possible, ce qui est naturellement inacceptable. Un exemple de turbomachine à système d'hélices contrarotatives est décrit dans le document US 2761517

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un système d'hélices contrarotatives pour turbomachine d'aéronef, comprenant une première et une seconde hélices centrées sur un axe longitudinal,
ladite première hélice comprenant un premier rotor d'hélice destiné à tourner dans un premier sens de rotation autour de l'axe longitudinal par rapport à un stator de ce système d'hélice, et portant des premières pales, ladite première hélice comprenant en outre un premier système de commande de calage des premières pales, permettant de déplacer ces dernières entre une position d'incidence minimale et une position d'incidence maximale, ledit système de commande de calage comprenant un premier organe coulissant selon l'axe longitudinal, coopérant avec lesdites premières pales de sorte que son déplacement selon un premier sens de coulissement conduit lesdites premières pales à se rapprocher de leur position d'incidence minimale, et de sorte que son déplacement selon un second sens de coulissement opposé au premier conduit lesdites premières pales à se rapprocher de leur position d'incidence maximale, ledit premier organe coulissant étant piloté par des premiers moyens rotatifs d'actionnement, dont le mouvement rotatif autour de l'axe longitudinal induit un mouvement de coulissement dudit premier organe selon le même axe, ledit système de commande de calage comprenant en outre un premier moteur permettant d'appliquer ledit mouvement rotatif auxdits premiers moyens rotatifs d'actionnement, lesdits premier organe coulissant et premiers moyens rotatifs d'actionnement étant entraînés en rotation par ledit premier rotor dans ledit premier sens de rotation, vis-à-vis du stator,
ladite seconde hélice comprenant un second rotor d'hélice destiné à tourner dans un second sens de rotation opposé au premier, autour de l'axe longitudinal par rapport au stator de ce système d'hélice, et portant des secondes pales, ladite seconde hélice comprenant en outre un second système de commande de calage des secondes pales, permettant de déplacer ces dernières entre une position d'incidence minimale et une position d'incidence maximale, ledit système de commande de calage comprenant un second organe coulissant selon l'axe longitudinal, coopérant avec lesdites secondes pales de sorte que son déplacement selon un troisième sens de coulissement conduit lesdites secondes pales à se rapprocher de leur position d'incidence minimale, et de sorte que son déplacement selon un quatrième sens de coulissement opposé au troisième conduit lesdites secondes pales à se rapprocher de leur position d'incidence maximale, ledit second organe coulissant étant piloté par des seconds moyens rotatifs d'actionnement, dont le mouvement rotatif autour de l'axe longitudinal induit un mouvement de coulissement dudit second organe selon le même axe, ledit système de commande de calage comprenant en outre un second moteur permettant d'appliquer ledit mouvement rotatif auxdits seconds moyens rotatifs d'actionnement, lesdits second organe coulissant et seconds moyens rotatifs d'actionnement étant entraînés en rotation par ledit second rotor dans ledit second sens de rotation, vis-à-vis du stator.

Selon l'invention, ledit système d'hélices contrarotatives comprend également des moyens débrayables permettant de rendre solidaires en rotation lesdits premiers et seconds moyens rotatifs d'actionnement, ledit système d'hélices étant conçu de sorte que lorsque ces moyens débrayables sont embrayés, deux vitesses de rotation relatives se créent respectivement d'une part entre ledit premier organe coulissant, entraîné en rotation par ledit premier rotor, et ses premiers moyens rotatifs d'actionnement associés, et d'autre part entre ledit second organe coulissant, entraîné en rotation par ledit second rotor, et ses seconds moyens rotatifs d'actionnement associés, conduisant chacun des premier et second organes coulissants à se déplacer respectivement dans ledit premier sens de coulissement et ledit troisième sens de coulissement, en amenant lesdites premières et secondes pales dans leur position d'incidence minimale.

L'invention, simple à mettre en oeuvre et peu onéreuse, présente une solution astucieuse permettant d'obtenir une mise en drapeau fiable et rapide des pales des deux hélices.

Elle repose donc sur l'utilisation de moyens débrayables permettant de rendre solidaires en rotation les premiers et seconds moyens rotatifs d'actionnement, ces moyens débrayables de couplage en rotation ne nécessitant que très peu d'énergie, et s'intégrant facilement dans l'architecture classique des systèmes d'hélices contrarotatives.

Avec le système selon l'invention, tant que les moyens débrayables restent débrayés, les premiers et seconds moyens rotatifs d'actionnement tournent dans des sens opposés, avec leurs rotors respectifs, et donc chacun dans le même sens et à une vitesse de rotation identique à celle de son rotor et de son élément coulissant associés. Cependant, lorsque les moyens débrayables sont embrayés suite à une commande de mise en drapeau des pales, les premiers et seconds moyens rotatifs d'actionnement deviennent couplés en rotation, de sorte qu'ils adoptent la même vitesse de rotation et un même sens de rotation.

Dans un premier cas, le plus naturel, cette vitesse de rotation des premiers et seconds moyens rotatifs d'actionnement tend vers la moyenne algébrique des vitesses de rotation des rotors, c'est-à-dire qu'elle devient nulle. Il se peut toutefois que dans un second cas, la vitesse des deux moyens rotatifs d'actionnement tende vers une vitesse non nulle, impliquant que ces deux moyens sont plus entraînés par un rotor que par l'autre. Cependant, dans ce dernier cas, la vitesse de ces deux moyens rotatifs d'actionnement restera inférieure aux vitesses de rotation des rotors et des organes coulissants entraînés par ces rotors.

Quoi qu'il en soit, dans ces deux cas envisageables, c'est la vitesse de rotation relative créée entre les moyens rotatifs d'actionnement, freinés réciproquement par leur accouplement, et leurs organes coulissants associés, toujours entraînés à la vitesse des rotors, qui permet d'obtenir de manière automatique le déplacement des organes coulissants dans des sens déterminés, conduisant à une mise en drapeau des pales des deux hélices.

A noter que le second cas indiqué ci-dessus se différencie du premier en ce sens que la mise en drapeau des pales de l'hélice voyant ses moyens rotatifs d'actionnement tourner dans un sens opposé à celui du rotor associé, se produit plus rapidement que la mise en drapeau des pales de l'autre hélice voyant ses moyens rotatifs d'actionnement tourner dans un même sens que celui du rotor associé, mais à une vitesse inférieure en raison du freinage opéré par l'autre hélice, via les moyens débrayables.

Par ailleurs, il est indiqué que le système d'hélices contrarotatives est de préférence conçu de sorte que lorsque les organes coulissants arrivent en fin de course dans leur mouvement de translation par rapport aux moyens rotatifs d'actionnement associés, plaçant les pales en position neutre, des butées établies en fin de course les empêchent de continuer à coulisser le long des moyens rotatifs d'actionnement, malgré l'application de la vitesse de rotation différentielle entre ces éléments. Ainsi, cela engendre un blocage, conduisant les organes coulissants à devenir solidaires en rotation des leurs moyens rotatifs d'actionnement associés. A titre indicatif, il est noté que ces butées peuvent être souples, de façon à minimiser les chocs produits par la rencontre entre les organes coulissants et les butées associées.

Une fois que les organes coulissants sont en butée, les moyens rotatifs d'actionnement sont entraînés en rotation avec les rotors, et comme ceux-ci embrayent l'un avec l'autre, l'embrayage joue un rôle de frein à disque. Ainsi, on peut s'apercevoir que le simple actionnement des moyens débrayables conduit successivement et automatiquement à la mise en drapeau des pales, et à l'arrêt en rotation des hélices.

Cet arrêt en rotation des hélices se produit également, mais de façon séquencée, lorsque les premiers et seconds moyens rotatifs d'actionnement continuent de tourner à une vitesse réduite, suite à l'actionnement des moyens débrayables. En effet, dans ce cas de figure évoqué ci-dessus où l'une des deux hélices voit ses moyens rotatifs d'actionnement tourner dans un sens opposé à celui du rotor associé, la butée de fin de course de l'organe coulissant associé à cette hélice se rencontre antérieurement à celle rencontrée sur l'autre hélice. Ainsi, la première hélice est mise en drapeau avant la seconde, et ses moyens rotatifs sont bloqués en rotation par rapport à son rotor. Les deux moyens rotatifs d'actionnement étant embrayés, ils tournent ensemble par rapport au second rotor, et ainsi les moyens rotatifs du second rotor tournent par rapport à ce second rotor, mettant de ce fait la seconde hélice en drapeau. Comme mentionné précédemment, cela engendre un blocage, conduisant également à l'arrêt en rotation de l'organe coulissant, ainsi qu'à celui du rotor couplé en rotation avec ce même organe.

De préférence, chacun desdits premiers et seconds moyens rotatifs d'actionnement est constitué par une vis à billes.

De préférence, lesdits moyens débrayables permettant de rendre solidaires en rotation lesdits premiers et seconds moyens rotatifs d'actionnement, sont constitués par un système d'embrayage à disques coulissants, de préférence commandé par un moteur porté par l'un des premiers et seconds moyens rotatifs d'actionnement.

Toujours de manière préférentielle, chacun des premier et second organes coulissants est constitué par un cône coulissant coopérant avec un doigt excentré de chacune des pales lui étant associées.

Préférentiellement, lesdits premier et troisième sens de coulissement sont identiques, et lesdits second et quatrième sens de coulissement sont identiques. Naturellement, il aurait été possible de prévoir une situation inverse, sans sortir du cadre de l'invention.

L'invention a par ailleurs pour objet une turbomachine pour aéronef comprenant un système d'hélices contrarotatives tel que décrit ci-dessus, cette turbomachine étant de préférence un turbopropulseur, mais pouvant alternativement être un turboréacteur. Naturellement, dans ce dernier cas, le système d'hélices est destiné à constituer la soufflante du turboréacteur.

De plus, quel que soit le type de turbomachine concerné, le système d'hélices est de préférence conçu de sorte que les hélices soient dépourvues de carénage radial extérieur les entourant, ce système étant alors dénommé « Open Rotor ».

Enfin, l'invention a également pour objet un procédé de pilotage d'un système d'hélices contrarotatives pour turbomachine d'aéronef tel que décrit ci-dessus. Avec ce procédé, lorsqu'un calage en incidence minimale des premières et secondes pales est requis, autrement dit une mise en drapeau de ces pales, lesdits moyens débrayables permettant de rendre solidaires en rotation lesdits premiers et seconds moyens rotatifs d'actionnement sont commandés de manière à s'embrayer.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'un système d'hélices contrarotatives pour turbomachine d'aéronef, selon un mode de réalisation préféré de la présente invention ;
- les figures 2a et 2b représentent des vues schématiques en coupe longitudinale d'une partie du système d'hélices contrarotatives montré sur la figure 1, explicitant son fonctionnement pour la mise en drapeau des pales d'hélices ; et
- la figure 3 représente une vue agrandie en perspective montrant des moyens débrayables permettant de rendre solidaires en rotation une partie de chacune des deux hélices du système montré sur les figures précédentes.

### EXPOSÉ DÉTAILLÉ DE MODES DE RÉALISATION PRÉFÉRÉS

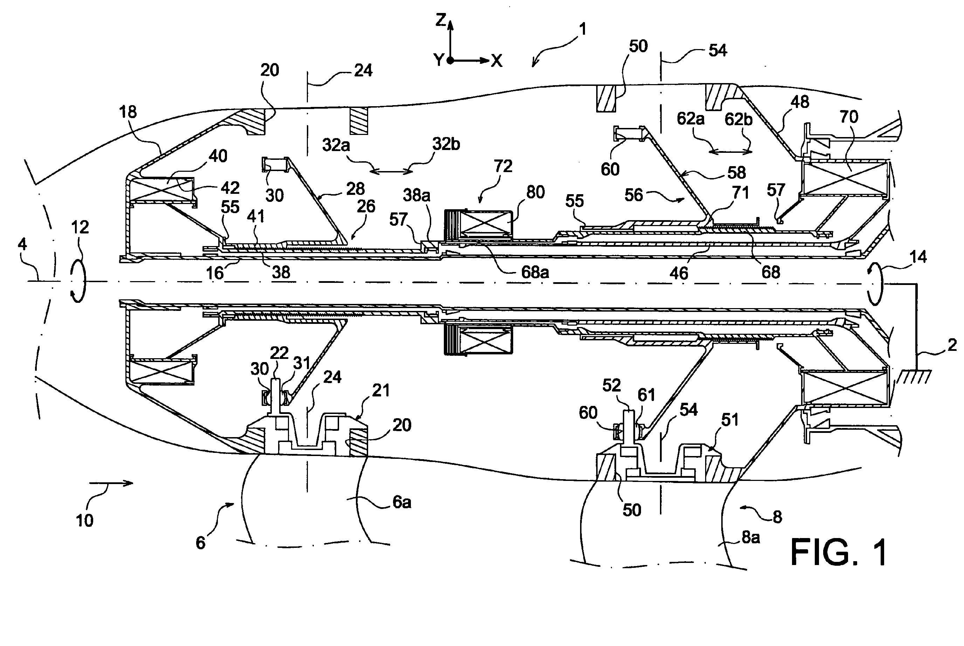

En référence à la figure 1, on peut apercevoir une partie d'un système d'hélices contrarotatives 1 pour turbomachine d'aéronef, selon un mode de réalisation préféré de la présente invention.

L'axe X correspond à la direction longitudinale du système d'hélices 1, direction qui correspond également à la direction longitudinale de la turbomachine destinée à intégrer un tel système d'hélices 1. L'axe Y correspond quant à lui à la direction transversale du système d'hélices 1, et l'axe Z à la direction verticale ou de la hauteur, ces trois axes étant orthogonaux entre eux.

Le système d'hélices 1 comprend un stator ou carter 2 (uniquement représenté schématiquement), centré sur un axe longitudinal 4 du système, parallèle à l'axe X. Ce stator est de façon connue destiné à être solidaire des autres carters de la turbomachine. A cet égard, il est indiqué que le système d'hélices 1 est de préférence conçu de sorte que les hélices soient dépourvues de carénage radial extérieur les entourant, à savoir du type « Open Rotor », comme visible sur la figure 1.

De plus, le système d'hélices contrarotatives 1 intègre une première hélice 6 ou hélice amont, portant des pales 6a. De manière analogue, le système 1 comprend une seconde hélice 8 ou hélice aval, portant des pales 8a. Ainsi, les hélices 6, 8 sont décalées l'une de l'autre selon une direction principale d'écoulement de l'air à travers le système 1, représentée schématiquement par la flèche 10 parallèle à l'axe X, cette direction principale d'écoulement servant également de référence pour les termes « amont » et « aval » employés ci-dessous. Les deux hélices 6, 8 sont destinées à tourner dans des sens opposés autour de l'axe 4 sur lequel elles sont centrées, les rotations s'effectuant par rapport au stator 2 restant immobile. L'hélice 6 tourne selon un premier sens de rotation 12 qui peut être le sens horaire en vue de face, et l'hélice 8 tourne selon un second sens de rotation 14, opposé au premier, qui peut être le sens anti-horaire en vue de face, même si une situation inverse pourrait être adoptée, sans sortir du cadre de l'invention.

Dans toute la description, il est noté que la notion de « vitesse de rotation » d'un élément donné correspond à sa vitesse de rotation par rapport au stator immobile 2, selon l'axe longitudinal 4, à moins qu'il n'en soit disposé autrement.

Tout d'abord pour ce qui concerne la première hélice 6, celle-ci comprend un arbre d'entraînement 16 centré sur l'axe 4, et destiné à être entraîné en rotation par un dispositif de transmission mécanique (non représenté), par exemple formant réducteur à train épicycloïdal, lui-même entraîné par la turbine de la turbomachine.

Cet arbre creux 16 porte fixement à son extrémité amont un premier rotor 18 tournant donc dans le premier sens 12, ce même rotor logeant au niveau de son extrémité radiale extérieure, à savoir au niveau de sa couronne circonférentielle, lesdites premières pales d'hélices 6a. Pour ce faire, des orifices 20 sont pratiqués dans le rotor 18 centré sur l'axe 4 pour loger le pied 21 des pales 6a, chacune de ces dernières disposant d'un doigt 22 excentré par rapport à un axe principal 24 de la pale, correspondant de préférence à un axe radial du système d'hélice 1.

Il est noté que le rotor 18 prend grossièrement une forme tronconique issue de l'extrémité amont de l'arbre entraînement 16, et s'ouvrant vers l'aval.

De manière connue, les doigts 22 excentrés et faisant saillie radialement vers l'intérieur appartiennent à un premier système de commande de calage 26 des premières pales, permettant de déplacer ces dernières entre une position d'incidence minimale et une position d'incidence maximale par rapport à l'axe 4. Le déplacement de chaque pale 6a entre ces deux positions s'effectue par pivotement de celle-ci sur elle-même, c'est-à-dire autour de son axe principal 24, qui correspond également à l'axe de l'orifice 20 associé.

Pour ce faire, le système de commande de calage 26 comprend un premier organe coulissant, par exemple du type cône de commande 28 centré sur l'axe 4, et capable de coulisser selon ce même axe par rapport au stator.

Ce cône de commande 28, par exemple s'ouvrant vers l'amont, présente au niveau de son extrémité amont de diamètre le plus important une pluralité d'orifices 30 permettant de loger les doigts excentrés 22 des premières pales. Comme cela est également connu de l'homme du métier, le déplacement du cône 28 selon un premier sens de coulissement 32a, à savoir vers l'amont selon l'axe 4, conduit les premières pales 6a à se rapprocher de leur position d'incidence minimale, également dite position d'angle minimal ou encore position neutre, recherchée pour effectuer une mise en drapeau de l'hélice 6. Comme évoqué précédemment, la rotation des pales 6a au sein de leurs orifices 20 selon leurs axes 24, vers leur position neutre montrée sur la figure 1, s'effectue en réponse de l'appui du cône en translation 28 sur les doigts excentrés 22 qu'il porte. Sur la figure 1, le cône 28 est en effet représenté dans sa position de fin de course dans le premier sens de coulissement 32a, où il permet aux pales 6a d'adopter leur position neutre assurant la mise en drapeau de l'hélice. Néanmoins, le système 1 pourrait alternativement être conçu de sorte que la position neutre des pales 6a soit obtenue avec le cône 28 placé en fin de course dans un second sens de coulissement 32b opposé au premier 32a, sans sortir du cadre de l'invention.

En référence toujours à la figure 1, de la même manière que celle décrite ci-dessus, le déplacement du cône 28 selon le second sens de coulissement 32b, à savoir vers l'aval selon l'axe 4, conduit les premières pales 6a à se rapprocher de leur position d'incidence maximale, recherchée pour obtenir une poussée maximale. Ici encore, la rotation des pales 6a selon leurs axes 24, vers leur position d'incidence maximale, s'effectue en réponse de l'appui du cône en translation 28 sur les doigts excentrés 22 qu'il porte.

Il est noté qu'en raison du logement des doigts excentrés 22 dans les orifices 30 du cône, éventuellement par l'intermédiaire de rotules 31, l'arbre 16, le rotor 18 et les pales 6a forment conjointement un ensemble qui est solidaire en rotation selon l'axe 4. A titre indicatif, le déplacement des doigts 22 et du cône 28 peut prendre la forme d'une combinaison d'une translation suivant l'axe 4 et d'une rotation autour de cet axe. Toujours à titre indicatif, il est possible de contourner ce double mouvement en introduisant un anneau entre les doigt excentrés du pied de pale, et ce même cône. Le mouvement de rotation précité s'effectue alors entre l'anneau et le cône, impliquant par conséquent que ce dernier ne se meut plus qu'en translation axiale.

Pour assurer la translation du cône de commande 28 selon les sens 32a et 32b, le système de commande de calage 26 est équipé de premiers moyens rotatifs d'actionnement, par exemple du type vis à billes 38, centrée sur l'axe 4. Cette vis 38 est conçue de manière classique, de façon à permettre de transformer son mouvement rotatif autour de l'axe 4, en un mouvement de coulissement du cône 28 selon ce même axe 4, à la manière d'une vis sans fin.

La vis 38 se situe autour de l'arbre 16, et est elle-même entourée par le cône de commande 28, dont une portion intérieure 41 sensiblement cylindrique coopère avec le filetage extérieur de la vis 38, restant en permanence fixe en translation par rapport au rotor 18 et au stator. A cet égard, il est noté que le cône 28 est le seul des éléments de l'hélice 6 précités à pouvoir être déplacé en translation selon l'axe 4 par rapport au stator, les autres éléments restant fixes en translation les uns par rapport aux autres, et par rapport à ce même stator.

L'extrémité amont de la vis à billes 38 coopère avec un premier moteur 40 permettant d'appliquer le mouvement rotatif à cette même vis, en vue d'un déplacement en translation du cône 28. En effet, il est par exemple prévu que le moteur 40 dispose d'un stator fixé sur le rotor 18 de l'hélice 6, par exemple dans une embase annulaire de ce rotor 18, et dispose également d'un rotor fixé sur l'extrémité amont de la vis 38. Par conséquent, quand le moteur 40 est à l'arrêt, la vis 38 est entraînée en rotation autour de l'axe 4 par le rotor de l'hélice, et donc dans le même sens à une même vitesse que l'ensemble solidaire en rotation précité, comprenant l'arbre 16, le rotor 18, les pales 6a et le cône 28. Cette immobilité en rotation de la vis 38 et de l'ensemble précité résulte alors de l'arrêt en rotation entre le rotor 18 et le stator du moteur 40.

En revanche, lorsque le moteur 40 est actionné, la vitesse de rotation de la vis 38 devient différente de celle du cône 28 toujours solidaire du rotor 18, d'où la création d'une vitesse de rotation relative entre ces deux éléments, conduisant au coulissement désiré dans l'un des deux sens 32a, 32b du cône 28 le long de la vis 38 restant immobile en translation par rapport au stator. C'est donc de cette manière, à savoir en pilotant le moteur 40, qu'il est possible de commander le calage des pales 6a, entre leur position d'incidence minimale et leur position d'incidence maximale.

Pour ce qui concerne la seconde hélice 8 située plus en aval, de conception sensiblement similaire à celle de l'hélice 6, celle-ci comprend un arbre entraînement 46 centré sur l'axe 4, et par exemple situé autour de l'arbre entraînement 16 la traversant. Il est également destiné à être entraîné en rotation par le dispositif de transmission mécanique entraîné par la turbine de la turbomachine.

Cet arbre creux 46 porte fixement à son extrémité aval un second rotor 48 tournant donc dans le second sens 14, ce même rotor logeant au niveau de son extrémité radiale extérieure, à savoir au niveau de sa couronne circonférentielle, lesdites secondes pales d'hélices 8a. Pour ce faire, des orifices 50 sont pratiqués dans le rotor 48 centré sur l'axe 4 pour loger le pied 51 des pales 8a, chacune de ces dernières disposant d'un doigt 52 excentré par rapport à un axe principal 54 de la pale, correspondant de préférence à un axe radial du système d'hélice 1.

Il est noté que le rotor 48 prend ici grossièrement une forme tronconique issue de l'extrémité aval de l'arbre entraînement 46, et s'ouvrant vers l'amont.

Les doigts excentrés 52 faisant saillie radialement vers l'intérieur appartiennent à un second système de commande de calage 56 des secondes pales, permettant de déplacer ces dernières entre une position d'incidence minimale et une position d'incidence maximale par rapport à l'axe 4. Le déplacement de chaque pale 8a entre ces deux positions s'effectue également par pivotement de celle-ci sur elle-même dans son orifice 50, c'est-à-dire autour de son axe principal 54 correspondant également à l'axe de cet orifice.

Pour ce faire, le système de commande de calage 56 comprend un second organe coulissant, par exemple du type cône de commande 58 centré sur l'axe 4, et capable de coulisser selon ce même axe.

Ce cône de commande 58, par exemple s'ouvrant vers l'amont, présente au niveau de son extrémité amont de diamètre le plus important une pluralité d'orifices 60 permettant de loger les doigts excentrés 52 des secondes pales. Comme cela est également connu de l'homme du métier, le déplacement du cône 58 selon un troisième sens de coulissement 62a identique au premier sens 32a, à savoir vers l'amont selon l'axe 4, conduit les secondes pales 8a à se rapprocher de leur position neutre, recherchée pour effectuer une mise en drapeau de l'hélice 8. Comme évoqué précédemment, la rotation des pales 8a selon leurs axes 54, vers leur position neutre montrée sur la figure 1, s'effectue en réponse de l'appui du cône en translation 58 sur les doigts excentrés 52 qu'il porte. Sur la figure 1, le cône 58 est en effet représenté dans sa position de fin de course dans le troisième sens de coulissement 62a, où il permet aux pales 8a d'adopter leur position neutre assurant la mise en drapeau de l'hélice. Néanmoins, le système 1 pourrait ici aussi alternativement être conçu de sorte que la position neutre des pales 8a soit obtenue avec le cône 58 placé en fin de course dans un quatrième sens de coulissement 62b opposé au troisième 62a, sans sortir du cadre de l'invention.

En référence toujours à la figure 1, de la même manière que celle décrite ci-dessus, le déplacement du cône 58 selon le quatrième sens 62b, identique au second sens de coulissement 32b précité, à savoir vers l'aval selon l'axe 4, conduit les secondes pales 8a à se rapprocher de leur position d'incidence maximale, recherchée pour obtenir une poussée maximale. Ici encore, la rotation des pales 8a selon leurs axes 54, vers leur position d'incidence maximale, s'effectue en réponse de l'appui du cône en translation 58 sur les doigts excentrés 52 qu'il porte.

Il est noté qu'en raison du logement des doigts excentrés 52 dans les orifices 60 du cône, éventuellement par l'intermédiaire de rotules 61, l'arbre 46, le rotor 48 et les pales 8a forment conjointement un ensemble qui est solidaire en rotation selon l'axe 4. Ici aussi, le déplacement des doigts 52 et du cône 58 peut prendre la forme d'une combinaison d'une translation suivant l'axe 4 et d'une rotation autour de cet axe. Toujours à titre indicatif, il est possible de contourner ce double mouvement en introduisant un anneau entre les doigt excentrés du pied de pale, et ce même cône. Le mouvement de rotation précité s'effectue alors entre l'anneau et le cône, impliquant par conséquent que ce dernier ne se meut plus qu'en translation axiale.

Pour assurer la translation du cône de commande 58 selon les sens 62a et 62b, le système de commande de calage 56 est équipé de seconds moyens rotatifs d'actionnement, par exemple également du type vis à billes 68, centrée sur l'axe 4. Cette vis 68 est conçue de manière classique, de façon à permettre de transformer son mouvement rotatif autour de l'axe 4, en un mouvement de coulissement du cône 58 selon ce même axe 4, à la manière d'une vis sans fin.

La vis 68 se situe autour de l'arbre 46, et est elle-même entourée par le cône de commande 58, dont une portion intérieure 70 sensiblement cylindrique coopère avec le filetage extérieur de la vis 68, restant en permanence fixe en translation par rapport au rotor 48 et au stator. A cet égard, il est noté que le cône 58 est le seul des éléments de l'hélice 8 précités à pouvoir être déplacé en translation selon l'axe 4 par rapport au stator, les autres éléments restant fixes en translation les uns par rapport aux autres, et par rapport à ce même stator.

L'extrémité aval de la vis à billes 68 coopère avec un second moteur 70 permettant d'appliquer le mouvement rotatif à cette même vis, en vue d'un déplacement en translation du cône 58. En effet, il est par exemple prévu que le moteur 70 dispose d'un stator fixé sur le rotor 48 de l'hélice 8, par exemple dans une embase annulaire de ce rotor 48, et dispose également d'un rotor fixé sur l'extrémité aval de la vis 68. Par conséquent, quand le moteur 70 est à l'arrêt, la vis 68 est entraînée en rotation autour de l'axe 4 dans le même sens à une même vitesse que l'ensemble solidaire en rotation précité, comprenant l'arbre 46, le rotor 48, les pales 8a et le cône 58. Cette immobilité en rotation de la vis 68 et de l'ensemble précité résulte alors de l'arrêt en rotation entre le rotor 48 et le stator du moteur 70.

En revanche, lorsque le moteur 70 est actionné, la vitesse de rotation de la vis 68 devient différente de celle du cône 58 toujours solidaire du rotor 48, d'où la création d'une vitesse de rotation relative entre ces deux éléments, conduisant au coulissement désiré dans l'un des deux sens 62a, 62b du cône 58 le long de la vis 68 restant immobile en translation par rapport au stator. C'est donc de cette manière, à savoir en pilotant le moteur 70, qu'il est possible de commander le calage des secondes pales 8a, entre leur position d'incidence minimale et leur position d'incidence maximale, et ce indépendamment du calage des premières pales 6a.

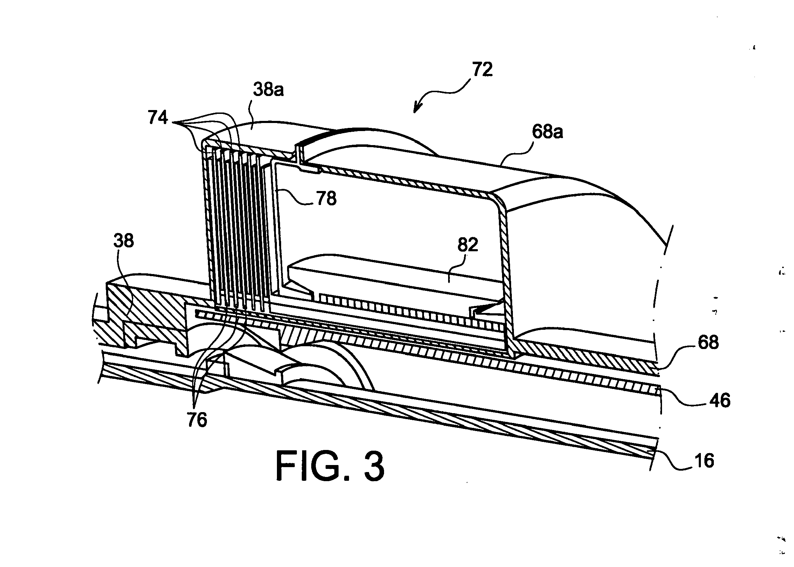

L'une des particularités de la présente invention réside dans la mise en place de moyens débrayables référencés 72, permettant de rendre solidaires en rotation les deux vis à billes 38, 68, dont l'extrémité aval 38a de la première se situe à proximité de l'extrémité amont 68a de la seconde, comme cela est visible sur la figure 1. Plus précisément, comme cela sera détaillé en référence à la figure 3, les deux extrémités coopèrent l'une avec l'autre pour former les moyens débrayables 72.

Globalement, le système d'hélices 1 est conçu de sorte que lorsque ces moyens débrayables 72 sont embrayés, il se crée un freinage réciproque des moyens rotatifs l'un sur l'autre, et donc une vitesse de rotation relative se crée d'une part entre le cône 28 entraîné en rotation par le premier rotor 18, et la vis freinée 38, et d'autre part entre le cône 58 entraîné en rotation par le second rotor 48, et la vis freinée 68 couplée à la vis 38. Ces vitesses de rotation relatives conduisent chacun des cônes 28, 58 à se déplacer respectivement dans le premier sens 32a et le troisième sens 62a, en amenant les pales 6a, 8a dans leur position neutre assurant la mise en drapeau.

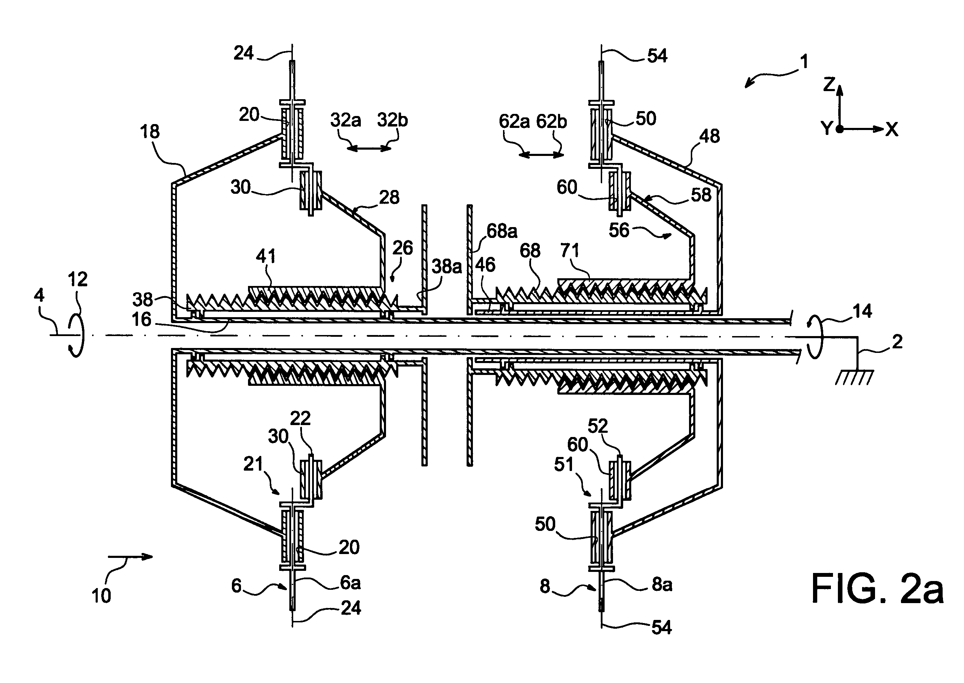

En référence à la figure 2a, on peut voir schématiquement le système d'hélices 1, dans une configuration telle qu'adoptée en fonctionnement normal, c'est-à-dire tant qu'aucun ordre de mise en drapeau des hélices n'a été ordonnée.

Comme mentionné précédemment, tant qu'aucune modification du calage n'est ordonnée, et tant que les moyens débrayables restent débrayés, les tant que les moyens débrayables restent débrayés, les vis 38 et 68 tournent dans des sens opposés 12, 14, chacune dans le même sens et à une vitesse de rotation identique à celle de son rotor 18, 48 et de son cône 28, 58 associés, en raison de son entraînement en rotation autour de l'axe 4 par ce même rotor 18, 48. Durant ce fonctionnement normal de la turbomachine, les moteurs 40, 70 peuvent indépendamment être activés afin de placer les pales 6a, 8a dans des positions de calage désirées.

Lorsque les moyens débrayables sont embrayés suite à une commande de mise en drapeau des pales, les vis 38, 68 frottent l'une sur l'autre, s'entraînent l'une l'autre, et finissent par devenir rapidement couplées en rotation, impliquant qu'elles adoptent automatiquement la même vitesse de rotation et un même sens de rotation.

Dans un premier cas, où les frottements réciproques des vis 36, 38 mènent à un équilibre cinématique entre ces deux vis, cette vitesse de rotation devient nulle. Dans un second cas, ces deux influences ne se traduisent pas par un équilibre cinématique entre les vis, et donc la vitesse de rotation est non nulle et identique pour les deux vis 38, 68. Cette vitesse reste inférieure aux vitesses de rotation des rotors 18, 48 et des cônes de commande 28, 58 entraînés par ces rotors.

Pour ces deux cas où les deux vis sont couplées en rotation, c'est la vitesse de rotation relative selon l'axe 4 créée entre les vis 38, 68 et leurs cônes 28, 58 associés, toujours entraînés à la vitesse des rotors, qui permet d'obtenir de manière automatique le déplacement rapide et fiable des cônes 28, 58 conduisant à une mise en drapeau des pales des deux hélices.

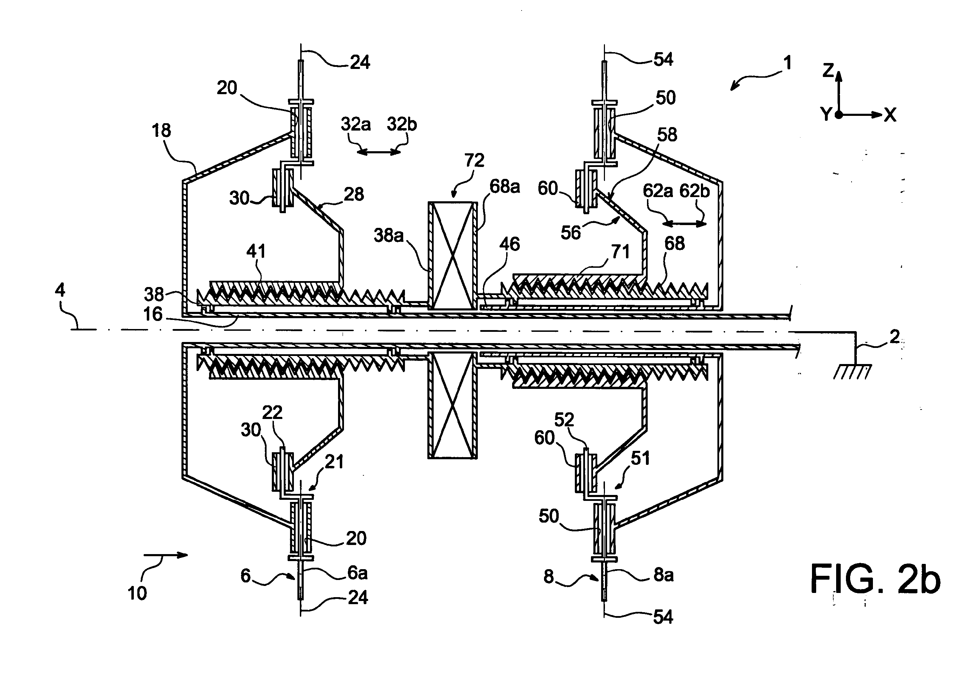

Le système d'hélices contrarotatives 1 est également conçu de sorte que lorsque les cônes 28, 58 arrivent en fin de course dans leur mouvement de translation par rapport aux vis 38, 68, plaçant les pales 6a, 8a en position neutre tel que cela est représenté sur la figure 2b, des butées établies en fin de course les empêchent de continuer à coulisser le long des vis. Ces butées peuvent par exemple être constituées par le contact entre les orifices 30, 60 des cônes 28, 58 et leurs doigts excentrés associés 22, 52, lorsque ces derniers ne peuvent être davantage déplacés vers l'amont. Cela engendre alors un blocage, conduisant les cônes 28, 58 à devenir solidaires en rotation des leurs vis associées. A cet égard, de manière encore plus préférée et comme schématisé par les références 55 sur la figure 1, on peut prévoir un contact plan sur plan en bout de course, entre chaque cône et sa vis associée. Bien entendu, de la butée 57 du même type peuvent également être prévues pour stopper la course dans le sens de déplacement opposé des cônes 28, 58.

Dans le premier cas où les vis 38, 68 s'arrêtent en rotation par rapport aux rotors 18 et 48 respectivement, suite à l'actionnement des moyens débrayables 72, les cônes atteignent leurs butées de fin de course de translation en même temps. Les pales sont ainsi mises en drapeau, et comme suite à leur arrêt en rotation par rapport à leurs rotors, les vis à billes sont respectivement entraînées en rotation par ces mêmes rotors, l'embrayage joue le rôle de frein a disque, ce qui tend à arrêter la rotation des hélices. Par conséquent, le simple actionnement des moyens débrayables 72 conduit automatiquement à la mise en drapeau des pales, puis à l'arrêt en rotation des hélices 6 et 8.

Dans le second cas évoqué ci-dessus où les vis 38, 68 continuent de tourner à une vitesse réduite par rapport au stator suite à l'actionnement des moyens débrayables 72, par exemple dans le sens de rotation 14, la butée de fin de course du cône 28 se rencontre antérieurement à celle rencontrée pour le cône 58. Ainsi, c'est à l'instant où le cône 28 arrive en fin de course montrée sur la figure 2b que lui-même et sa vis associée 38, se bloquent pour devenir solidaires en rotation avec le rotor 18. Ainsi, la vis 68 tourne avec le rotor 18, ce qui accélère le déplacement en translation du cône 58 dans le troisième sens 62a, qui rejoint donc plus rapidement sa position de fin de course montrée sur la figure 2b. Quand le cône 58 atteint sa propre butée de fin de course, la pale est mise en drapeau et la vis 68 tend à être entraînée en rotation avec le rotor 48. Ainsi comme les rotors 18 et 48 tournent dans des sens opposés et comme les vis 38 et 68 sont solidaires en rotation (effet de la butée), l'embrayage se comporte comme un frein à disque, qui ralentit les deux rotors 18 et 48.

En référence à présent à la figure 3, on peut apercevoir un exemple de réalisation des moyens débrayables 72, intégrant l'extrémité aval 38a de la première vis 38 et l'extrémité amont 68a de la seconde vis 68, ces deux extrémités étant situées à proximité l'une de l'autre.

Globalement, les moyens 72 sont constitués par un système d'embrayage à disques coulissants. Plus spécifiquement, il est prévu deux séries de disques 74, 76, la première série de disques 74 orthogonaux à l'axe 4 étant en liaison glissière avec la vis 38, et la seconde série de disques 76 également orthogonaux à l'axe 4 étant en liaison glissière avec la vis 68.

Au repos, ces disques 74, 76 sont suffisamment écartés pour ne pas frotter les uns contre les autres, de sorte que les deux vis 38, 68 peuvent tourner dans des sens opposés selon le même axe, sans que la présence du système d'embrayage 72 ne provoque de gêne.

En revanche, suite à la réception d'un ordre de mise en drapeau des pales, il est prévu que les disques 74, 76 soient mis en contact de manière à établir le couplage en rotation des deux extrémités 38a, 68a.

Pour ce faire, il est prévu au sein de l'extrémité amont 68a un piston 78 capable d'être déplacé selon l'axe 4 par rapport à cette même extrémité, afin de venir presser les disques 74, 76 les uns contre les autres, et donc de comprimer les deux séries. Ce déplacement en translation du piston 78 est assuré par un moteur 80 (représenté schématiquement sur la figure 1 et retiré de la figure 3), situé au sein l'extrémité amont 68a. De préférence, il s'agit d'un moteur rotatif disposant d'un stator fixé sur l'extrémité amont 68a, et d'un rotor 82 coopérant avec une portion filetée du piston 78. La rotation du rotor 82 fixe en translation par rapport à l'extrémité amont 68a est alors convertie en un mouvement en translation du piston 82 selon l'axe 4, par rapport à cette même extrémité 68a.

Alternativement, il peut être envisagé une solution alternative pour les moyens débrayables 72, comprenant des ressorts à mémoire de forme, dont la détente appuierait sur le piston pour créer l'effet d'embrayage.

Bien entendu, diverses modifications peuvent être apportées par l'homme du métier à l'invention qui vient d'être décrite, uniquement à titre d'exemples non limitatifs.

## Revendications

1. Système d'hélices contrarotatives (1) pour turbomachine d'aéronef, comprenant une première et une seconde hélices (6, 8) centrées sur un axe longitudinal (4),
ladite première hélice (6) comprenant un premier rotor d'hélice (18) destiné à tourner dans un premier sens de rotation (12) autour de l'axe longitudinal par rapport à un stator (2) de ce système d'hélice, et portant des premières pales (6a), ladite première hélice comprenant en outre un premier système de commande de calage (26) des premières pales, permettant de déplacer ces dernières entre une position d'incidence minimale et une position d'incidence maximale, ledit système de commande de calage comprenant un premier organe coulissant (28) selon l'axe longitudinal, coopérant avec lesdites premières pales de sorte que son déplacement selon un premier sens de coulissement (32a) conduit lesdites premières pales à se rapprocher de leur position d'incidence minimale, et de sorte que son déplacement selon un second sens de coulissement (32b) opposé au premier conduit lesdites premières pales à se rapprocher de leur position d'incidence maximale, ledit premier organe coulissant étant piloté par des premiers moyens rotatifs d'actionnement (38), dont le mouvement rotatif autour de l'axe longitudinal induit un mouvement de coulissement dudit premier organe selon le même axe, ledit système de commande de calage comprenant en outre un premier moteur (40) permettant d'appliquer ledit mouvement rotatif auxdits premiers moyens rotatifs d'actionnement, lesdits premier organe coulissant et premiers moyens rotatifs d'actionnement étant entraînés en rotation par ledit premier rotor dans ledit premier sens de rotation, vis-à-vis du stator,
ladite seconde hélice (8) comprenant un second rotor d'hélice (48) destiné à tourner dans un second sens de rotation (14) opposé au premier, autour de l'axe longitudinal par rapport au stator de ce système d'hélice, et portant des secondes pales (8a), ladite seconde hélice comprenant en outre un second système de commande de calage (56) des secondes pales, permettant de déplacer ces dernières entre une position d'incidence minimale et une position d'incidence maximale, ledit système de commande de calage comprenant un second organe coulissant (58) selon l'axe longitudinal, coopérant avec lesdites secondes pales de sorte que son déplacement selon un troisième sens de coulissement (62a) conduit lesdites secondes pales à se rapprocher de leur position d'incidence minimale, et de sorte que son déplacement selon un quatrième sens de coulissement (62b) opposé au troisième conduit lesdites secondes pales à se rapprocher de leur position d'incidence maximale, ledit second organe coulissant étant piloté par des seconds moyens rotatifs d'actionnement (68), dont le mouvement rotatif autour de l'axe longitudinal induit un mouvement de coulissement dudit second organe selon le même axe, ledit système de commande de calage comprenant en outre un second moteur (70) permettant d'appliquer ledit mouvement rotatif auxdits seconds moyens rotatifs d'actionnement, lesdits second organe coulissant et seconds moyens rotatifs d'actionnement étant entraînés en rotation par ledit second rotor dans ledit second sens de rotation, vis-à-vis du stator,
**caractérisé en ce que** ledit système d'hélices contrarotatives comprend également des moyens débrayables (72) permettant de rendre solidaires en rotation lesdits premiers et seconds moyens rotatifs d'actionnement (38, 68), ledit système d'hélices étant conçu de sorte que lorsque ces moyens débrayables sont embrayés, deux vitesses de rotation relatives se créent respectivement d'une part entre ledit premier organe coulissant (28), entraîné en rotation par ledit premier rotor, et ses premiers moyens rotatifs d'actionnement associés (38), et d'autre part entre ledit second organe coulissant (58), entraîné en rotation par ledit second rotor, et ses seconds moyens rotatifs d'actionnement associés (68), conduisant chacun des premier et second organes coulissants à se déplacer respectivement dans ledit premier sens de coulissement et ledit troisième sens de coulissement, en amenant lesdites premières et secondes pales (6a, 6b) dans leur position d'incidence minimale.

2. Système d'hélices contrarotatives (1) selon la revendication 1, **caractérisé en ce que** chacun desdits premiers et seconds moyens rotatifs d'actionnement (38, 68) est constitué par une vis à billes.

3. Système d'hélices contrarotatives (1) selon la revendication 1 ou la revendication 2, **caractérisé en ce que** lesdits moyens débrayables (72) permettant de rendre solidaires en rotation lesdits premiers et seconds moyens rotatifs d'actionnement, sont constitués par un système d'embrayage à disques coulissants (74, 76).

4. Système d'hélices contrarotatives (1) selon l'une quelconque des revendications précédentes, **caractérisé en ce que** chacun des premier et second organes coulissants (28, 58) est constitué par un cône coulissant coopérant avec un doigt excentré (22, 52) de chacune des pales lui étant associées.

5. Système d'hélices contrarotatives (1) selon l'une quelconque des revendications précédentes, **caractérisé en ce que** lesdits premier et troisième sens de coulissement sont identiques, et **en ce que** lesdits second et quatrième sens de coulissement sont identiques.

6. Turbomachine pour aéronef comprenant un système d'hélices contrarotatives selon l'une quelconque des revendications précédentes.

7. Procédé de pilotage d'un système d'hélices contrarotatives (1) pour turbomachine d'aéronef selon l'une quelconque des revendications 1 à 5, **caractérisé en ce que** lorsqu'un calage en incidence minimale des premières et secondes pales est requis, lesdits moyens débrayables (72) permettant de rendre solidaires en rotation lesdits premiers et seconds moyens rotatifs d'actionnement (38, 68) sont commandés de manière à s'embrayer.

## Claims

1. System of counter-rotating propellers (1) for aircraft turbine engine, comprising a first and second propeller (6, 8) centered on a longitudinal axis (4), said first propeller (6) comprising a first propeller rotor (18) intended to turn in a first direction of rotation (12) about the longitudinal axis with respect to a stator (2) of the propeller system, and bearing first blades (6a), said first propeller comprising, in addition, a first stalling control system (26) for the first blades, allowing the displacement of the latter between a minimum angle of attack position and a maximum angle of attack positions, said stalling control system comprising a first element (28) sliding along a longitudinal axis, coupling said first blades so that the first displacement of same along a first direction of sliding (32a) leads said first blades to come closer to the minimum angle of attack position thereof, and so that the displacement of same along a second direction of sliding (32b) opposite to the first, leads said first blades to come closer to the maximum angle of attack position thereof, said first sliding element being piloted by first rotating means of actuating (38), of which a rotating movement about the longitudinal axis induces a sliding movement of said first element about the same axis, said stalling control system comprising, in addiction, a first motor (40) allowing for the application of said rotating movement to said first rotating means of actuating, said first sliding element and first rotating means of actuating being driven into rotation by said first rotor in said first direction of rotation, with regard to the stator,
said second propeller (8) comprising a second propeller rotor (48) intended to turn in a second direction of rotation (41) opposite to the first direction, about the longitudinal axis with respect to a stator of the propeller system, and bearing second blades (8a), said second propeller comprising, in addition, a second stalling control system (56) for the second blades, allowing the displacement of the latter between a minimum angle of attack positions and a maximum angle of attack position, said stalling control system comprising a second element (58) sliding along a longitudinal axis, coupling said second blades so that the displacement of same along a third direction of sliding (62a) leads said second blades to come closer to the minimum angle of attack position thereof, and so that the displacement of same along a fourth direction of sliding (62b) opposite to the third, leads said second blades to come closer to the maximum angle of attack position thereof, said second sliding element being piloted by second rotating means of actuating (68), of which a rotating movement about the longitudinal axis induces a sliding movement of said second element about the same axis, said stalling control system comprising, in addition, a second motor (70) allowing the application of said rotating movement to said second rotating means of actuating, said second sliding element and second rotating means of actuating being driven into rotation by said second rotor in said second direction of rotation, with regard to the stator,
**characterized in that**, said system of counter-rotating propellers also comprises means of disengaging (72) for rigidly fixing in rotation said first and second rotating means of actuation (38, 68), said system of propellers being designed so that when the means of disengaging are engaged, two relative speeds of rotation are respectively created between said first sliding element (28), driven into rotation by said first rotor, and the associated first rotating means of actuating (38) of same, and between said second sliding element (58), driven into rotation by said second rotor, and the associated second rotating means of actuating (68), leading each of the first and second sliding elements to move respectively in said first sliding direction and said third sliding direction, bringing said first and second blades (6a, 6b) into the minimal angle of attack position thereof.

2. System of counter-rotating propellers (1) according to claim 1, **characterized in that** each of said first and second rotating means of actuating (38, 68) is constituted of a ballscrew.

3. System of courter-rotating propellers (1) according to claim 1 or claim 2, **characterized in that** said means of disengaging (72) which enable said first and second rotating means of actuating to become rigidly fixed in rotation, are constituted of a clutch system with sliding disks (74, 76).

4. System of counter-rotating propellers (1) according to any of the precious claims, **characterized in that** each of the first and second sliding elements (28, 58) is constituted of a sliding cone matching an eccentric pin (22, 52) of each of the blades associated thereof.

5. System of counter-rotating propellers (1) according to any of the precious claims, **characterized in that** said first and third sliding directions are identical, and **in that** said second and fourth sliding directions are identical.

6. Aircraft turbine engine comprising a system of counter-rotating propellers according to any of the previous claims.

7. Method for pivoting a system of counter-rotating propellers (1) for an aircraft turbine engine according to any of claims 1 to 5, **characterized in that** when a stalling in minimum angle of attack is required for the first and second blades, said means of disengaging (72) which enable said first and second rotating means of actuating (38, 68) to become rigidly fixed in rotation, are operated for engagement.

## Patentansprüche

1. System gegenläufiger Propeller (1) für Turbotriebwerke eines Luftfahrzeugs, mit einem ersten und einem zweiten Propeller (6, 8), welche auf einer Längsachse (4) zentriert sind,
wobei dieser erste Propeller (6) einen ersten Propeller-Rotor (18) umfasst, der dazu vorgesehen ist, in einer ersten Drehrichtung (12) gegenüber einem Stator (2) dieses Propellersystems um die Längsachse zu drehen, und erste Propellerblätter (6a) trägt, wobei dieser erste Propeller ferner ein erstes Blattanstellungs-Steuersystem (26) für die ersten Propellerblätter aufweist, welches es ermöglicht, letztere zwischen einer Minimalanstellungsposition und einer Maximalanstellungsposition zu verschieben, wobei dieses Anstellungs-steuersystem ein erstes entlang der Längsachse gleitendes Organ (28) umfasst, das mit den genannten ersten Propellerblättern dergestalt zusammenwirkt, dass sein Verschieben in einer ersten Gleitrichtung (32a) diese ersten Propellerblätter ihrer Minimalanstellungsposition näher bringt, und dass sein Verschieben in einer zweiten Gleitrichtung (32b), die entgegengesetzt zur ersten gerichtet ist, diese ersten Propellerblätter ihrer Maximalanstellungsposition näher bringt, wobei dieses Gleitorgan durch erste drehbare Betätigungsmittel (38) gesteuert wird, deren Drehbewegung um die Längsachse eine Gleitbewegung dieses ersten Organs entlang der gleichen Achse bewirkt, wobei dieses Anstellungs-Steuersystem ferner einen ersten Motor (40) umfasst, der es ermöglicht, diese ersten drehbaren Betätigungsmittel in diese Drehbewegung zu versetzen, wobei dieses erste Gleitorgan und diese ersten drehbaren Betätigungsmittel durch diesen ersten Rotor in der genannten ersten Drehrichtung gegenüber dem Stator, in Drehbewegung versetzt werden,
wobei der zweite Propeller (8) einen zweiten Propeller-Rotor (48) umfasst, der dazu vorgesehen ist, in einer zweiten Drehrichtung (14), die entgegengesetzt zur ersten gerichtet ist, gegenüber dem Stator dieses Propellersystems um die Längsachse zu drehen, und zweite Propellerblätter (8a) trägt, wobei dieser zweite Propeller ferner ein zweites Blattanstellungs-Steuersystem (56) für die zweiten Propellerblätter aufweist, welches es ermöglicht, letztere zwischen einer Minimalanstellungsposition und einer Maximalanstellungsposition zu verschieben, wobei dieses Anstellungs-Steuersystem ein zweites entlang der Längsachse gleitendes Organ (58) umfasst, das mit den genannten zweiten Propellerblättern dergestalt zusammenwirkt, dass sein Verschieben in einer dritten Gleitrichtung (62a) diese zweiten Propellerblätter sich ihrer Minimalanstellungsposition nähern lässt, und dass sein Verschieben in einer vierten Gleitrichtung (62b), die entgegengesetzt zur dritten gerichtet ist, diese zweiten Propellerblätter ihrer Maximalanstellungsposition näher bringt, wobei dieses zweite Gleitorgan durch zweite drehbare Betätigungsmittel (68) gesteuert wird, deren Drehbewegung um die Längsachse eine Gleitbewegung dieses zweiten Organs entlang der gleichen Achse bewirkt, wobei dieses Anstellungs-Steuersystem ferner einen zweiten Motor (70) umfasst, der es ermöglicht, diese zweiten drehbaren Betätigungsmittel in diese Drehbewegung zu versetzen, wobei dieses zweite Gleitorgan und diese zweiten drehbaren Betätigungsmittel durch diesen zweiten Rotor in der genannten zweiten Drehrichtung gegenüber dem Stator in Drehbewegung versetzt werden,
**dadurch gekennzeichnet,**
**dass** dieses System gegenläufiger Propeller ferner ausrückbare Kopplungsmittel (72) aufweist, die es ermöglichen, die ersten und zweiten drehbaren Betätigungsmittel (38, 68) drehfest miteinander zu verbinden, wobei das Propellersystem dergestalt ausgeführt ist, dass, wenn diese ausrückbaren Kopplungsmittel eingekuppelt sind, sich zwei relative Drehgeschwindigkeiten einstellen, die eine zwischen dem ersten Gleitorgan (28), das durch den ersten Rotor in Drehung versetzt wird, und seinen zugehörigen ersten drehbaren Betätigungsmitteln (38), und die andere zwischen dem zweiten Gleitorgan (58), das durch den zweiten Rotor in Drehung versetzt wird, und seinen zugehörigen zweiten drehbaren Betätigungsmitteln (68), wobei bewirkt wird, dass sich das erste und das zweite Gleitorgan in der genannten ersten Gleitrichtung bzw. in der genannten dritten Gleitrichtung verschieben und dabei die ersten und zweiten Propellerblätter (6a, 6b) in ihre Minimalanstellungsposition bringen.

2. System gegenläufiger Propeller (1) nach Anspruch 1,
**dadurch gekennzeichnet,**
**dass** jedes der ersten und zweiten drehbaren Betätigungsmittel (38, 68) von einer Kugelumlaufspindel gebildet ist.

3. System gegenläufiger Propeller (1) nach Anspruch 1 oder Anspruch 2,
**dadurch gekennzeichnet,**
**dass** diese ausrückbaren Kopplungsmittel (72), die es ermöglichen, die ersten und zweiten drehbaren Betätigungsmittel drehfest miteinander zu verbinden, von einem Kupplungssystem mit Gleitscheiben (74, 76) gebildet werden.

4. System gegenläufiger Propeller (1) nach einem der vorherigen Ansprüche,
**dadurch gekennzeichnet,**
**dass** das erste und das zweite Gleitorgan (28, 58) jeweils von einem gleitenden Konus gebildet ist, der mit einem jeweiligen außermittigen Finger (22, 52) der Propellerblätter, die ihm zugeordnet sind, zusammenwirkt.

5. System gegenläufiger Propeller (1) nach einem der vorherigen Ansprüche,
**dadurch gekennzeichnet,**
**dass** diese erste und dritte Gleitrichtungen identisch sind, und dass diese zweite und vierte Gleitrichtungen identisch sind.

6. Turbotriebwerk für Luftfahrzeuge, welches ein System gegenläufiger Propeller nach einem der vorherigen Ansprüche aufweist.

7. Verfahren zur Steuerung eines Systems gegenläufiger Propeller (1) für Luftfahrzeug-Turbotriebwerke nach einem der Ansprüche 1 bis 5,
**dadurch gekennzeichnet,**
**dass**, wenn ein Anstellen der ersten und zweiten Propellerblätter in ihre Minimalanstellungsposition gewünscht ist, die ausrückbaren Kopplungsmittel (72), die es ermöglichen, die ersten und zweiten drehbaren Betätigungsmittel (38, 68) drehfest miteinander zu machen, dergestalt gesteuert werden, dass sie einkuppeln.
